# EUROPEAN PATENT SPECIFICATION

(11) **EP 1 936 606 B1**
(45) Date of publication and mention of the grant of the patent: **05.10.2011**
(21) Application number: 06026600.4
(22) Date of filing: 21.12.2006
(51) Int. Cl.: G10L 15/18, G01C 21/36, G10L 15/22

(54) **Multi-stage speech recognition**
Mehrstufige Spracherkennung
Reconnaissance vocale multi-niveaux

(43) Date of publication of application: 25.06.2008
(73) Proprietor: Harman Becker Automotive Systems GmbH, 76307 Karlsbad (DE)
(72) Inventor: Löw, Andreas, 89077 Ulm (DE); Grill, Joachim, 89073 Ulm (DE)
(74) Representative: Grünecker, Kinkeldey, Stockmair & Schwanhäusser Anwaltssozietät

(56) References cited:
- US-A1- 2002 032 568
- US-A1- 2002 062 213
- US-A1- 2005 055 210

## Description

### Field of Invention

The present invention relates to a method and a system for speech recognition. In particular, it relates to a method for multi-stage speech recognition of a speech signal comprising semantic information of different classes that allows for efficiently recognizing words in large vocabulary lists and to a system that makes use of this method.

### Background of the Invention

Speech recognition systems, i.e. devices for converting an acoustic signal to a sequence of words or strings, become increasingly prevalent nowadays. In the last years due to significant improvement in speech recognition technology, high performance speech analyzing, recognition algorithms and speech dialog systems have been made available. Present day speech input capabilities comprise voice dialing, call routing, document preparation, etc. A speech dialog system can, e.g., be employed in a vehicle, in particular, an automobile, to allow the user to control different devices such as a mobile phone, a car radio, a navigation system and/or an air condition.

During speech recognition verbal utterances, either isolated words or continuous speech, are captured by a microphone or a telephone, for example, and converted to analogue electronic signals that subsequently are digitalized. The digital signals are usually subject to a subsequent spectral analysis. Recent representations of the speech waveforms sampled typically at a rate between 6.6 kHz and 20 kHz are derived from the short term power spectra and represent a sequence of characterizing vectors containing values of what is generally referred to as features/feature parameters. The values of the feature parameters are used in succeeding stages in the estimation of the probability that the portion of the analyzed waveform corresponds to, for example, a particular entry, i.e. a word, in a vocabulary list.

US 2002/0032568 A1 discloses a method for voice recognition employing a dictionary storing section having a hierarchical structure. A recognizing section calculates similarity between the input speech signal and each queuing word in a recognition dictionary loaded into RAM, that is with each entry of a dictionary list,

US 2002/0062213 A1 discloses a method for information processing and information display according to which a user is given the opportunity for a speech input comprising information of different semantic classes. According to different embodiments either one of the classes is pre-selected and the corresponding grammar is used for speech recognition or one grammar for each class is simultaneously used for the speech recognition.

US 2005/0055210 A1 discloses a two stage method for speech recognition wherein a first stage (recognition pass) a first language model is used for recognition of part of a detected speech signal and a new language model is selected or generated based at least in part on the results of the previous recognition pass. In particular, the newly selected or generated language model comprises semantic information different from the language model used for the first speech recognition pass, for example, street names versus city names.

Some speech recognition systems require speaker enrollment, i.e. a user must provide samples of his or her speech. Other systems can be used in a speaker independent way. The recognized words can be the final results, as for applications such as commands or data entry, or can serve as an input to further linguistic processing. For the sake of simplicity and as common in the business of speech recognition, by words herein are meant linguistic words but also subunits of words as syllables and phonemes or allophones, i.e. context dependent phonemes. Any sequence of any kind of words may be termed a sentence.

Speech recognition systems usually make use of a concatenation of allophones that constitute a linguistic word. The allophones are typically represented by Hidden Markov Models (HMM) that are characterized by a sequence of states each of which has a well-defined transition probability. In order to recognize a spoken word, the systems have to compute the most likely sequence of states through the HMM. This calculation is usually performed by means of the Viterbi algorithm, which iteratively determines the most likely path through the associated trellis.

Speech recognizing systems choose the guess for an orthographic representation of a spoken word or sentence that corresponds to sampled acoustic signals from a finite vocabulary of words that can be recognized and are stored, for example, as data lists. In the art comparison of words recognized by the recognizer and words of a lexical list usually take into account the probability of mistaking one word, e.g. a phoneme, for another. Many speech recognition systems evaluate the hypothesized correspondents to uttered words or sentences for the purpose of rank ordering them and creating N-best lists.

However, the above-mentioned vocabulary lists become readily very long for practical applications, for example, if a speech recognizer is used to access an entry of a telephone directory of a mobile phone and initiate calling only via speech commands. Another example is the verbal control of a vehicle navigation system. In these cases, conventional search processes can take an unacceptable long time and are also error prone. In general, these problems are particularly distinctive for embedded recognition systems with relatively limited computer resources, e.g., vehicle navigation systems and audio entertainment devices as MP3 players. Operation comfort and consumer acceptance are affected by long waiting times and unreliable recognition results.

Given the above-mentioned drawbacks of the state of the art there is a need for an improved method and system for recognition of entries in long vocabulary lists that allow for a reliable and fast matching of analyzed speech signals and entries in the corresponding vocabulary lists. There is a particular need for a method for recognizing entries in long vocabulary lists that works effectively and reliably, even if only relatively limited computer resources, as it is the case in embedded systems, are available.

### Description of the invention

The above-mentioned problem is solved by the method according to claim 1 and the system for speech recognition according to claim 12.

The method for multi-stage speech recognition of a speech signal comprising semantic information of at least two classes according to claim 1, comprises the steps of
providing a database comprising at least one vocabulary list for each of the at least two classes respectively;
detecting and digitizing the speech signal;
recognizing a part of the speech signal comprising semantic information of a first one of the at least two classes based on at least one first vocabulary list of the database for the first one of the at least two classes to obtain a first recognition result;
restricting at least one second vocabulary list of the database for a second one of the at least two classes based on the first recognition result;
recognizing a part of the speech signal comprising semantic information of a second one of the at least two classes based on the restricted at least one second vocabulary list for the second one of the at least two classes to obtain a second recognition result;
determining the part of the speech signal comprising semantic information for which the shortest one of the vocabulary lists is present in the database; and
wherein the at least one first vocabulary list of the database is the shortest one of the vocabulary lists and the part of the speech signal comprising semantic information of the first one of the at least two classes is the determined part of the speech signal comprising semantic information for which the shortest one of the vocabulary lists is present in the database; and
wherein the speech signal contains an utterance of a class name of at least one of the at least two classes and wherein the step of recognizing a part of the speech signal comprising semantic information of the first one of the at least two classes is preceded by recognizing the uttered class name.

The speech signal may comprise at least two words, in particular, at least two phonemes, each of which comprises information of one class, respectively. In general, by words herein are meant linguistic words or subunits thereof, as characters, consonants, vowels, phonemes, or allophones. The inventive method can be used in speech recognition that operates on the base of isolated words or on the base of continuous speech.

Detected speech waveforms are sampled and processed to generate a representation of the speech signals. The representation of the speech signals may comprise a sequence of characteristic or feature vectors containing feature parameters providing information on, e.g., the frequencies and amplitudes of signals that help to discriminate, e.g., between different phonemes.

The step of digitizing the speech signals may comprise dividing the speech signals into frames. For each frame, at least one characterizing vector can be determined. In particular, the characterizing vectors can be cepstral vectors. The cepstrum separates the glottal frequency from the vocal tract resonance. The cepstrum is obtained in two steps. A logarithmic power spectrum is calculated and on that an inverse Fourier transform is performed.

A sequence of recognition candidates, e.g., based on characterizing vectors representing the received and digitized speech signals, might be generated corresponding to a part the speech signal. Typically, this recognizing step results in a set of alternative suggestions, i.e. string hypotheses, for a string representation of a spoken word or a sentence. By the term 'sentence' herein is meant a sequence of linguistic words. The probability to correctly identify the verbal utterance usually differs between the several hypotheses.

The individual string hypotheses may be assigned scores during the recognizing operation. This means that they may be evaluated by some measure according to one or more predetermined criteria with respect to the probability that the hypotheses represent the verbal utterance. The several generated string hypotheses may constitute an ordered set or sequence according to a confidence measure of the individual hypotheses. For example, the string hypotheses may constitute an N-best list as known in the art.

Thus, the steps of recognizing the part of the speech signal comprising semantic information of the first one of the at least two classes and/or recognizing the part of the speech signal comprising semantic information of the second one of the at least two classes may comprise generating an N-best list of recognition candidates from the entries of the respective vocabulary lists corresponding to the respective parts of the speech signal. Ordered N best lists can readily be used for the further processing.

The semantic information may, e.g., represent genus names, species names, proper names, country names, city names, artists' names, etc. A vocabulary list may, thus, consist genus names, species names, proper names, country names, city names, artists' names, etc.

By the inventive method speech recognition can very efficiently be performed. Each recognition process for one of the different signal parts of the detected speech signal is performed based on an appropriate vocabulary list. In response to the recognition result for a first signal part the vocabulary list used for speech recognition for a second signal part in restricted. In other words, for the second recognition processing a sub-set of the second vocabulary list is used rather than the complete second vocabulary list. Thereby; the entire recognition process of the speech signal is significantly accelerated as compared to the art. For each stage of the recognition process, a rather simple grammar can be used. The multi-stage speech recognition may comprise a number of stages as three, four or five stages. For each stage a different vocabulary list is used that is restricted before recognition based on the recognition result previously obtained for the preceding stage.

Since the first vocabulary list contains less entries than the second one, the recognition process of the entire speech signal can be significantly accelerated, since in the first stage of the recognition process the complete corresponding vocabulary list has to be checked for the best matching entry, whereas in the subsequent stages restricted vocabulary lists are used.

According to the invention is not necessary that a preceding signal part is to be recognized first and, then, a subsequent part is recognized based on a vocabulary list that is restricted based on the recognition result of the preceding signal part. Rather it can be determined which signal part comprises information related to a class corresponding to a relatively short vocabulary list, in particular, the shortest vocabulary list, and it is this signal part that is recognized first independently on the temporal order of the signal parts of the detected speech signal. The selection which signal part is to be recognized first might be facilitated by previously recognizing a keyword indicating a particular class.

As mentioned above the recognition results may be obtained in form of N-best lists of recognition candidates. In particular, the step of generating the N-best list of recognition candidates may comprise assigning a score to each entry of the respective vocabulary lists and/or may be based on a predetermined probability of mistaking one of the list entries with another one of the list entries.

The scores can, e.g., be determined on the basis of an acoustic model probability and/or a Hidden Markov Model and/or a grammar model probability and or a combination thereof.

In the simplest case, acoustic features of phonemes can be used to determine the score. For example, an "s" usually has a temporal duration of more than 50 ms and exhibits mainly frequencies above some 44 kHz. Knowledge of this kind can be used to derive rules for statistical classification methods.

The score may represent distance measures indicating how far from or close to a specified phoneme a generated characterizing vector and thereby the associated word hypothesis is. In recognizing sentences grammar models including syntactic and semantic information may be used in order to score individual string hypotheses representing, in particular, linguistic words.

Hidden Markov Models (HMM) represent one of the dominant recognition paradigms with respect to phonemes. An HMM is a double stochastic model according to which the generation of underlying phoneme strings and the surface acoustic representations are both represented probabilistically as Markov processes.

The reliability of the entire speech recognition process can be improved by the employment of score assignment and by taking into account the probability of mistaking one of the list entries with another one. Utilization of two different criteria, i.e. the score and the probability of mistaking one hypothesis with another, may further improve the reliability method for speech recognition. The probability of mistaking, e.g., an "F" for an "N" or one frequently occurring phoneme by another one is know a priori or can be determined by test runs.

In principle, the assigning may be performed giving priority to the score rather than the probability of mistaking the at least one string hypothesis with another string hypothesis or vice versa. Usually, the former case will be preferred, since the score in many practical applications might be the most important criterion for a successful assigning of a word hypothesis to the corresponding entry in a lexical list.

The comparing and/or assigning can also be performed based on a sub-string of the entire at least one of the string hypotheses. A conformity by parts of a word hypothesis and an entry in a pre-stored list may be sufficient for finding rather quickly a correct data representation of the detected speech signals.

The above examples are advantageously used for the voice operation of a navigation system, in particular, a vehicle navigation system, or an audio device, e.g., an MP3 player, or an electronic address book.

According to different examples, thus,
a) the part of the speech signal comprising semantic information of the first one of the at least two classes comprises an utterance of a city name and the first recognition result is a city name and b) the part of the speech signal comprising semantic information of the second one of the at least two classes comprises an utterance of a street name and the second recognition result is a street name; or
c) the part of the speech signal comprising semantic information of the first one of the at least two classes comprises an utterance of an artist's name and the first recognition result is an artist's name and d) the part of the speech signal comprising semantic information of the second one of the at least two classes comprises an utterance of a title of a song and the second recognition result is a title of a song; or
e) the part of the speech signal comprising semantic information of the first one of the at least two classes comprises an utterance of a person's name and the first recognition result is a person's name and f) the part of the speech signal comprising semantic information of the second one of the at least two classes comprises an utterance of an address or a telephone number and the second recognition result is a telephone number.

For example, the detected and digitized speech signal comprises the utterance "song title xy by artist z". Then, the name z of the artist is first recognized and, then, the title xy is recognized based on a vocabulary list comprising titles of songs that is restricted to songs by artists whose names are obtained in the preceding recognition stage as recognition candidates for the signal part representing xy.

Furthermore, it is provided a computer program product, comprising one or more computer readable media having computer-executable instructions for performing the steps of one of the examples of the method for multi-stage speech recognition of a speech signal comprising semantic information of at least two classes as described above.

The above-mentioned problem is also solved by a system for speech recognition, comprising
a database configured to store at least two vocabulary lists;
an interface configured to detect a speech signal;
a processing means configured to digitize the detected speech signal;
a recognizing means configured to recognize a part of the speech signal comprising semantic information of a first class based on a first vocabulary list of the database to obtain a first recognition result;
a discrimination means configured to restrict at least one vocabulary list of the database that is different from the first vocabulary list based on the first recognition result; and wherein
the recognizing means is also configured to recognize a part of the speech signal comprising semantic information of a second class different from the first class based on the restricted at least one vocabulary list of the database that is different from the first vocabulary list to obtain a second recognition result;
wherein the recognition means is further configured to determine the part of the speech signal containing an utterance of a class name of at least one of the at least two classes and comprising semantic information for which the shortest one of the vocabulary lists is present in the database; and
to recognize the class name and subsequently the determined part of the speech signal comprising semantic information for which the shortest one of the vocabulary lists is present in the database as the part of the speech signal comprising semantic information of the first class based on the first vocabulary list of the database to obtain a first recognition result wherein the first vocabulary list is the shortest one of the vocabulary lists is present in the database.

The recognizing means may be configured to perform the recognition process as explained above. Moreover, the processing means may be configured to digitize and process the detected speech signal by dividing the speech signal into frames and determining for each frame at least one characterizing vector. The at least one characterizing vector may comprise the spectral content of the speech signal and/or is a cepstral vector. In particular, the speech recognition means is configured to recognize the parts of the speech signal comprising semantic information of the first and the second class without interruption (synthesized speech output), i.e. the speech signal is detected and subsequently processed automatically without any prompt to the user.

The present invention also provides a vehicle navigation system comprising the above-mentioned system for speech recognition. Convenient input of a navigation destination is thereby enabled which results in a fast and reliable destination setting by the navigation system.

Moreover, an audio, in particular, an MP3 player, or a video device comprising the system for speech recognition as mentioned above is provided. Thereby, a comfortable voice control audio devices as MP3 player is provided. It is understood that the MP3 player is not restricted to playing MP3 encoded data. Typical examples for other present day media files that might be processed by the MP3 player are audio such as WMA, OGG, etc.

The present invention also provides a cell phone or a Personal Digital Assistant (PDA) or a smartphone (PDA phone) comprising the above system for speech recognition. The Personal Digital Assistant (PDA) or smartphone (PDA phone) may both comprise a Personal Information Manager including a scheduler module (appointment calendar) and an address book. The system for speech recognition may also be incorporated in an electronic organizer, in particular, in a PalmTop or BlackBerry.

Additional features and advantages of the invention will be described with reference to the drawings. In the description, reference is made to the accompanying figures that are meant to illustrate preferred embodiments of the invention. It is understood that such embodiments do not represent the full scope of the invention that is defined by the claims given below.

Figure 1 shows principal steps according to an embodiment of the disclosed method for speech recognition comprising restriction of vocabulary lists in accordance with preceding recognition results.

Figure 2 illustrates steps of speech recognition in the context of a vehicle navigation system in accordance with the present invention.

Figure 3 illustrates steps of speech recognition in the context of the voice operation of an MP3 player in accordance with the present invention.

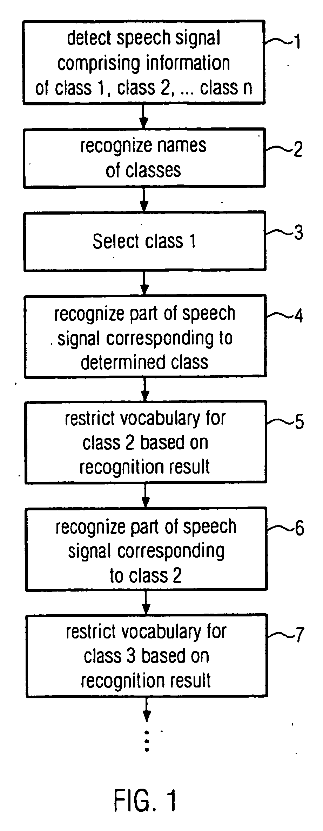

Figure 1 illustrates an embodiment of the inventive method for speech recognition by means of a flow chart. First, a speech signal is detected 1. The verbal utterance sensed by a microphone or an array of microphones is converted to analogue electrical signals and subsequently digitized by A/D conversion. The digitized signals are used for further signal processing. The speech signal comprises information of a number of classes, i.e. different parts of the speech signal relate to different kinds of information. Examples for classes are genus names, species names, proper names, country names, city names, artists' names, etc. For the recognition of the different parts of the speech signal, different vocabulary lists are used. In particular, for each class a separate vocabulary list may be provided.

According to the present example, the speech signal comprises names of classes. These names are recognized first 2. The names of the classes may, e.g., by names of cities and streets when the recognition method is implemented in a vehicle navigation system (see below) or the name of an artist when the recognition method is implemented in an MP3 player (see below).

Next, class No. 1 is selected. In the present example, this class is determined as being associated with the corresponding smallest vocabulary list as compared to other classes. The part of the speech signal that comprises information of the class 1 determined to correspond to the smallest vocabulary list is recognized 4. Next, the part of the speech signal comprising information of a class corresponding to the second smallest vocabulary list is recognized. Here, this class is denoted as class No. 2. Based on the previous recognition result the vocabulary list corresponding to class 2 is restricted 5 before the actual process of recognizing the part of the speech signal comprising semantic information of class 2. Then, this part of the speech signal is recognized 6 based on the restricted vocabulary list.

The above steps of restricting vocabulary lists and subsequently identifying entries of the restricted vocabulary lists with parts of the speech signal are repeated up to the last class (class n) information of which is present in the speech signal. Thus, the vocabulary list of class 3 is restricted 7 on the basis of the recognition result of the part of the speech signal comprising information of class 2, etc.

The multi-stage recognition process allows for a relatively simple grammar in each speech recognition stage. The individual stages of speech recognition follow each other without any intermediate prompt to the user. Complexity of the recognition is reduced by the gradual restriction of the vocabulary lists used for the recognition process.

At least for some of the stages of the recognition of the entire speech signal only subsets of the vocabulary lists are to be taken into account. Consequently, recognition of the detected speech utterance is faster than in the art.

In the above-described processing the digitized speech signal can be pulse code modulated, i.e. they are transformed into sets or frames of useful measurements or features at a fixed rate, typically once every 10-20 ms. Typical frames may include, e.g., 300 samples of 20 ms duration each. In principle, these measurements can then be used to search for the most likely word candidate, making use of constraints imposed by, e.g., acoustic, lexical, and language models.

The speech waveform may be sampled at a rate between 6.6 kHz and 20 kHz and processed to produce a new representation as a sequence of characterizing or feature vectors containing values of what are generally called features / feature parameters. The vectors typically comprise between 10 and 20 feature parameters and are computed for every frame. These feature parameter values, e.g. the energy in different frequency ranges, are then used in succeeding stages for the estimation of the probability that the portion of waveform analyzed corresponds to a particular detected phonetic event.

The actual speech recognition process can be performed by generating N-best lists based on cepstral vectors as it is known in the art. Different models may be used for generating the N-best lists of recognition candidates corresponding to the detected speech signals. Advantageously, a hidden Markov model (HMM) is employed. An HMM is a doubly stochastic model, in which the generation of the underlying phoneme string and the frame-by-frame surface acoustic realizations are both represented probabilistically as Markov processes.

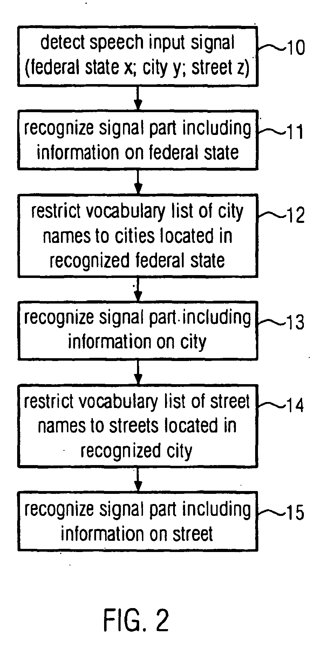

Figure 2 illustrates the inventive speech recognition in the context of vehicle navigation. Consider a navigation system installed in an automobile. The navigation system comprises a speech input by means of which the driver can input the navigation destination. He inputs the address he wants to be guided to by uttering the name of a federal state x, a city name y and a street name z. The utterance is detected in form of a speech input signal 10. First, the signal part including the utterance of the federal state is recognized 11. Then, the vocabulary list of all city names stored in a database of the navigation system is restricted to entries referring to cities located in the recognized federal state 12. Next, the signal part including information of the city y of the navigation destination is processed for speech recognition 13 based on the already restricted vocabulary list of city names (i.e. the sub-set of city names referring to cities located in the recognized federal state).

Based on the recognized city name a vocabulary list comprising street names can be restricted to street names referring to streets located in the recognized city 14. From this list, the correct entry corresponding to the uttered street name z is identified 15. The above-mentioned signal parts can be identified, e.g., by pauses in the speech input signal. Alternatively, these signal parts may be introduced by keywords that can easily be recognized by the speech recognition means.

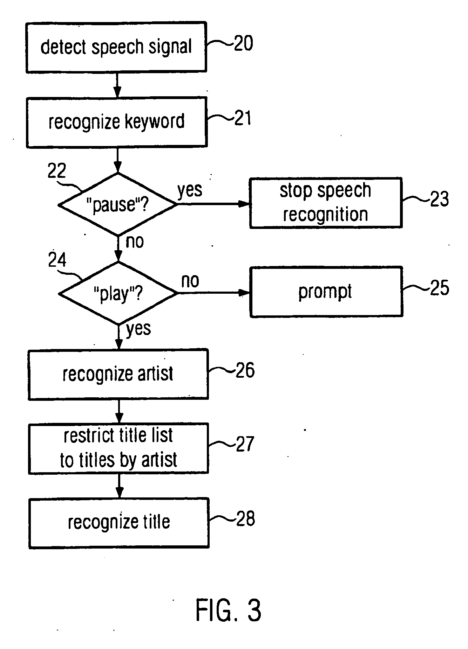

Figure 3 shows an example for the implementation of the herein disclosed method for speech recognition in an audio device, e.g., a CD player, a DVD player or an MP3 player. A user operates the audio device by a speech control. The audio device comprises a microphone that detects 20 a speech signal generated by the user as well as a speech recognition means. The speech recognition means is designed to be able to identify a number of keywords. Thus, the speech signal is processed, analyzed and checked for a keyword that might be present 21. If, e.g., the "keyword "pause" or "halt" or "stop" is recognized 22, the speech recognition process is stopped 23. If no such keyword is recognized 22, the speech signal is checked for the keyword "play". If neither the keyword "pause" (or halt" or "stop") nor the keyword "play" is recognized 24 the speech recognition may be stopped or the speech recognition means may prompt 25 the user to ask for a new instruction.

If the keyword "play" is recognized 24, a part of the speech signal including information on the name of an artist is processed in order to recognize the artist's name 26. A typical speech input signal could have the structure: "play" <song title> "by" <artist's name>. A vocabulary list comprising artists' names is expected to be much smaller than a vocabulary list comprising the titles of songs. Thus, during the recognition process, first recognition based on a smaller vocabulary list is performed and based on the recognition result a larger vocabulary list is restricted before the subsequent speech recognition. It is noted that in the present example, a part of the speech signal that is detected later than another one if recognized first and then the other one is recognized based on the previous recognition result.

In the present case, an N best list comprising a predetermined number N of recognition candidates for the artist's name is generated. In the next step a restricted list of vocabulary entries representing only song titles of songs performed by the artists whose names are among the N best list is created 27. It is only the thus obtained list is searched for the best candidate(s) matching the recognized part of the speech signal that includes information on the song title 28.

According to the above-described embodiment, for example, a number of some 20000 song titles that might be stored in a vocabulary list in the MP3 player is reduced to a sub-set of some hundred song titles or less related to the recognized N best list of artists. Moreover, ambiguities of recognition results can be avoided or at least reduced by the multi-stage speech recognition of a user's utterance operating the audio device by voice control, since titles of songs by artists whose names are not included in the N best list are ignored for recognizing the desired song title.

All previously discussed embodiments are not intended as limitations but serve as examples illustrating features and advantages of the invention. It is to be understood that some or all of the above described features can also be combined in different ways.

## Claims

1. Method for multi-stage speech recognition of a speech signal comprising semantic information of at least two classes, comprising the steps of
providing a database comprising at least one vocabulary list for each of the at least two classes respectively:
detecting (1; 10; 20) and digitizing the speech signal;
recognizing (4; 11; 26) a part of the speech signal comprising semantic information of a first one of the at least two classes based on at least one first vocabulary list of the database for the first one of the at least two classes to obtain a first recognition result;
restricting (5; 12; 27) at least one second vocabulary list of the database for a seconde one of the at least two classes based on the first recognition result; and
recognizing (6; 13; 28) a part of the speech signal comprising semantic information of a second one of the at least two classes based on the restricted at least one second vocabulary list for the second one of the at least two classes to obtain a second recognition result;
**characterized**
**in that** the speech signal contains an utterance of a name of a class of at least one of the at least two classes and wherein the step of recognizing a part of the speech signal comprising semantic information of the first one of the at least two classes is preceded by recognizing the uttered class name.
and by determining the part of the speech signal comprising semantic information for which the shortest one of the vocabulary lists is present in the database; and
**in that** the at least one first vocabulary list of the database is the shortest one of the vocabulary lists and the part of the speech signal comprising semantic information of the first one of the at least two classes is the determined part of the speech signal comprising semantic information for which the shortest one of the vocabulary lists is present in the database.

2. The method according to claim 1, wherein the recognizing (4; 11; 26) the part of the speech signal comprising semantic information of the first one of the at least two classes and/or the recognizing (6; 13; 28) the part of the speech signal comprising semantic information of the second one of the at least two classes comprises generating an N-best list of recognition candidates from the entries of the respective vocabulary lists corresponding to the respective parts of the speech signal.

3. The method according to claim 2, wherein generating the N-best list of recognition candidates comprises assigning a score to each entry of the respective vocabulary lists and/or is based on a predetermined probability of mistaking one of the list entries with another one of the list entries.

4. Method according to claim 3, wherein the scores are determined on the basis of an acoustic model probability and/or a Hidden Markov Model and/or a grammar model probability and/or a combination thereof.

5. Method according to one of the preceding claims, wherein the step of digitizing the speech signal comprises dividing the speech signal into frames and determining for each frame at least one characterizing vector.

6. Method according to claim 5, wherein the at least one characterizing vector comprises the spectral content of the speech signal and/or is a cepstral vector.

7. Method according to one of the preceding claims, wherein
a) the part of the speech signal comprising semantic information of the first one of the at least two classes comprises an utterance of a city name and the first recognition result is a city name and b) the part of the speech signal comprising semantic information of the second one of the at least two classes comprises an utterance of a street name and the second recognition result is a street name; or
c) the part of the speech signal comprising semantic information of the first one of the at least two classes comprises an utterance of an artist's name and the first recognition result is an artist's name and d) the part of the speech signal comprising semantic information of the second one of the at least two classes comprises an utterance of a title of a song and the second recognition result is a title of a song; or
e) the part of the speech signal comprising semantic information of the first one of the at least two classes comprises an utterance of a person's name and the first recognition result is a person's name and f) the part of the speech signal comprising semantic information of the second one of the at least two classes comprises an utterance of an address or a telephone number and the second recognition result is a telephone number.

8. Computer program product, comprising one or more computer readable media having computer-executable instructions for performing the steps of the method according to one of the Claims 1 - 8.

9. System for speech recognition, comprising
a database configured to store at least two vocabulary lists;
an interface configured to detect a speech signal;
a processing means configured to digitize the detected speech signal;
a recognizing means configured to recognize a part of the speech signal comprising semantic information of a first class based on a first vocabulary list of the database to obtain a first recognition result;
a discrimination means configured to restrict at least one vocabulary list of the database that is different from the first vocabulary list based on the first recognition result; and wherein
the recognizing means is also configured to recognize a part of the speech signal comprising semantic information of a second class different from the first class based on the restricted at least one vocabulary list of the database that is different from the first vocabulary list to obtain a second recognition result;
**characterized in that**
the recognition means is further configured to determine the part of the speech signal containing an utterance of a name of a class of at least one of the at least two classes and comprising semantic information for which the shortest one of the vocabulary lists is present in the database; and
to recognize the class name and subsequently the determined part of the speech signal comprising semantic information for which the shortest one of the vocabulary lists is present in the database as the part of the speech signal comprising semantic information of the first class based on the first vocabulary list of the database to obtain a first recognition result wherein the first vocabulary list is the shortest one of the vocabulary lists is present in the database.

10. Vehicle navigation system comprising the system for speech recognition according to claim 9.

11. Audio device, in particular, an MP3 player, or video device, comprising the system for speech recognition according to claim 9.

12. Cell phone or smartphone or Personal Digital Assistant comprising the system for speech recognition according to claim 9.

## Patentansprüche

1. Verfahren für eine Mehrstufen-Spracherkennung eines Sprachsignals, das semantische Informationen aus zumindest zwei Klassen umfasst, wobei das Verfahren die Schritte umfasst
Bereitstellen einer Datenbank mit zumindest einer Vokabelliste jeweils für jede der zumindest zwei Klassen;
Detektieren (1; 10; 20) und Digitalisieren des Sprachsignals;
Erkennen (4; 11; 26) eines Teils des Sprachsignals, der semantische Informationen aus einer ersten der zumindest zwei Klassen umfasst, auf der Grundlage zumindest einer ersten Vokabelliste der Datenbank für die erste der zumindest zwei Klassen, um ein erstes Erkennungsergebnis zu erhalten;
Beschränken (5; 12; 27) von zumindest einer zweiten Vokabelliste der Datenbank für eine zweite der zumindest zwei Klassen auf der Grundlage des ersten Erkennungsergebnisses; und
Erkennen (6; 13; 28) eines Teils des Sprachsignals, der semantische Informationen aus einer zweiten der zumindest zwei Klassen umfasst, auf der Grundlage der beschränkten zumindest einen zweiten Vokabelliste für die zweite der zumindest zwei Klassen, um ein zweites Erkennungsergebnis zu erhalten;
**gekennzeichnet**
**dadurch, dass** das Sprachsignal eine Äußerung eines Klassennamens zumindest einer der zumindest zwei Klassen enthält und dem Schritt des Erkennens eines Teils des Sprachsignals, das semantische Informationen aus der ersten der zumindest zwei Klassen umfasst, das Erkennen des geäußerten Klassennamens vorhergeht;
und durch Bestimmen des Teils des Sprachsignals, der semantische Informationen umfasst, für den die kürzeste der Vokabellisten in der Datenbank vorliegt;
und **dadurch**, dass die zumindest eine erste Vokabelliste der Datenbank die kürzeste der Vokabellisten ist und der Teil des Sprachsignals, der semantische Informationen aus der ersten der zumindest zwei Klassen umfasst, der bestimmte Teil des Sprachsignals, der semantische Informationen umfasst, ist, für den die kürzeste der Vokabellisten in der Datenbank vorliegt.

2. Das Verfahren gemäß Anspruch 1, in dem das Erkennen (4; 11; 26) des Teils des Sprachsignals, der semantische Informationen aus der ersten der zumindest zwei Klassen umfasst, und/oder das Erkennen (6; 13; 28) des Teils des Sprachsignals, der semantische Informationen aus der zweiten der zumindest zwei Klassen umfasst, das Erzeugen einer N-Besten-Liste von Erkennungskandidaten aus den Einträgen der jeweiligen Vokabellisten entsprechend des jeweiligen Teilen des Sprachsignals umfasst.

3. Das Verfahren gemäß Anspruch 2, in dem das Erzeugen der N-Besten-Liste von Erkennungskandidaten das Zuweisen einer Bewertung zu jedem Eintrag der jeweiligen Vokabellisten umfasst und/oder auf der Grundlage einer vorbestimmten Wahrscheinlichkeit des Verwechselns eines der Listeneinträge mit einem anderen der Listeneinträge erfolgt.

4. Verfahren gemäß Anspruch 3, in dem die Bewertungen auf der Grundlage einen akustischen Modellwahrscheinlichkeit und/oder eines Hidden-Markov-Modells und/oder einer Grammatikmodellwahrscheinlichkeit und einer Kombination daraus bestimmt werden.

5. Verfahren gemäß einem der vorhergehenden Ansprüche, in dem der Schritt des Digitalisierens des Sprachsignals Unterteilen des Sprachsignals in Frames und Bestimmen zumindest eines charakterisierenden Vektors für jeden Frame umfasst.

6. Verfahren gemäß Anspruch 5, in dem der zumindest eine charakterisierende Vektor den spektralen Inhalt des Sprachsignals umfasst und/oder ein cepstraler Vektor ist

7. Verfahren gemäß einem der vorhergehenden Ansprüche, in dem
a) der Teil des Sprachsignals, der semantische Informationen aus der ersten der zumindest zwei Klassen umfasst, eine Äußerung eines Stadtnamens umfasst und das erste Erkennungsergebnis ein Stadtname ist und b) der Teil des Sprachsignals, der semantische Informationen aus der zweiten der zumindest zwei Klassen umfasst, eine Äußerung eines Straßennamens umfasst und das erste Erkennungsergebnis ein Straßenname ist, oder
c) der Teil des Sprachsignals, der semantische Informationen aus der ersten der zumindest zwei Klassen umfasst, eine Äußerung eines Künstlernamens umfasst und das erste Erkennungsergebnis ein Künstlername ist und d) der Teil des Sprachsignals, der semantische Informationen aus der zweiten der zumindest zwei Klassen umfasst, eine Äußerung eines Liedtitels umfasst und das erste Erkennungsergebnis ein Liedtitel ist, oder
e) der Teil des Sprachsignals, der semantische Informationen aus der ersten der zumindest zwei Klassen umfasst, eine Äußerung eines Personennamens umfasst und das erste Erkennungsergebnis ein Personenname ist und f) der Teil des Sprachsignals, der semantische Informationen aus der zweiten der zumindest zwei Klassen umfasst, eine Äußerung einer Adresse oder einer Telefonnummer umfasst und das erste Erkennungsergebnis eine Adresse oder eine Telefonnummer ist.

8. Computerprogrammprodukt, das ein oder mehrere computerlesbare Medien umfasst, die computerausführbare Anweisungen zum Ausführen der Schritte des Verfahrens gemäß einem der Ansprüche 1 - 8 aufweisen.

9. System zur Spracherkennung, das umfasst
eine Datenbank, die dazu ausgebildet ist, zumindest zwei Vokabellisten zu speichern;
eine Schnittstelle, die dazu ausgebildet ist, ein Sprachsignal zu detektieren;
eine Verarbeitungseinrichtung, die dazu ausgebildet ist, das detektierte Sprachsignal zu digitalisieren;
eine Erkennungseinrichtung, die dazu ausgebildet ist, einen Teil des Sprachsignals, der semantische Informationen aus einer ersten Klasse umfasst, auf der Grundlage einer ersten Vokabelliste der Datenbank zu erkennen, um ein erstes Erkennungsergebnis zu erhalten;
eine Unterscheidungseinrichtung, die dazu ausgebildet ist, auf der Grundlage des ersten Erkennungsergebnisses zumindest eine Vokabelliste der Datenbank zu beschränken, die von der ersten Vokabelliste verschieden ist; und wobei
die Erkennungseinrichtung ebenso dazu ausgebildet ist, einen Teil des Sprachsignals, der semantische Informationen aus einer zweiten, von der ersten verschiedene Klasse, umfasst, auf der Grundlage der beschränkten zumindest einen Vokabelliste der Datenbank, die von der ersten Vokabelliste verschieden ist, zu erkennen, um ein zweites Erkennungsergebnis zu erhalten;
**dadurch gekennzeichnet, dass**
die Erkennungseinrichtung weiterhin dazu ausgebildet ist, den Teil des Sprachsignals zu bestimmen, der eine Äußerung eines Klassennamens zumindest einer der zumindest zwei Klassen enthält und semantische Informationen umfasst, für die die kürzeste der Vokabellisten in der Datenbank vorliegt; und
den Klassennamen und nachfolgend den bestimmten Teil des Sprachsignals, der semantische Informationen umfasst, für die die kürzeste der Vokabellisten in der Datenbank vorliegt, als den Teil des Sprachsignals, der semantische Informationen der ersten Klasse umfasst, auf der Grundlage der ersten Vokabelliste der Datenbank zu erkennen, um ein erstes Erkennungsergebnis zu erhalten, wobei die erste Vokabelliste die kürzeste der Vokabellisten ist, die in der Datenbank vorliegen.

10. Fahrzeugnavigationssystem, das das System zur Spracherkennung gemäß Anspruch 9 umfasst.

11. Audiovorrichtung, insbesondere ein MP3-Spieler oder eine Videovorrichtung, die das System zur Spracherkennung gemäß Anspruch 9 umfasst.

12. Mobiltelefon oder Smartphone oder Personal Digital Assistant, das System zur Spracherkennung gemäß Anspruch 9 umfassend.

## Revendications

1. Procédé pour la reconnaissance vocale à niveaux multiples d'un signal de parole comprenant des informations sémantiques d'au moins deux classes, comprenant les étapes consistant à :
fournir une base de données comprenant au moins une liste de vocabulaire pour chacune des au moins deux classes, respectivement,
détecter (1 ; 10 ; 20) et numériser le signal de parole,
reconnaître (4 ; 11 ; 26) une partie du signal de parole comprenant des informations sémantiques de la première des au moins deux classes sur la base d'au moins une première liste de vocabulaire de la base de données pour la première des au moins deux classes afin d'obtenir un premier résultat de reconnaissance,
restreindre (5 ; 12 ; 27) au moins une seconde liste de vocabulaire de la base de données pour une seconde des au moins deux classes sur la base du premier résultat de reconnaissance, et
reconnaître (6 ; 13 ; 28) une partie du signal de parole comprenant les informations sémantiques d'une seconde des au moins deux classes sur la base d'au moins la seconde liste restreinte de vocabulaire pour la seconde des au moins deux classes afin d'obtenir un second résultat de reconnaissance,
**caractérisé**
**en ce que** le signal de parole contient une énonciation du nom d'une classe d'au moins l'une des au moins deux classes et dans lequel l'étape consistant à reconnaître une partie du signal de parole, comprenant des informations sémantiques de la première des au moins deux classes, est précédée par la reconnaissance du nom de classe énoncé,
et en déterminant la partie du signal de parole comprenant des informations sémantiques pour lesquelles la plus courte des listes de vocabulaire est présente dans la base de données, et
**en ce que** la au moins première liste de vocabulaire de la base de données est la plus courte des listes de vocabulaire et que la partie du signal de parole comprenant des informations sémantiques de la première des au moins deux classes représente la partie déterminée du signal de parole comprenant des informations sémantiques pour lesquelles la plus courte des listes de vocabulaire est présente dans la base des données.

2. Procédé selon la revendication 1, dans lequel la reconnaissance (4 ; 11 ; 26) de la partie du signal de parole comprenant des informations sémantiques de la première des au moins deux classes et/ou la reconnaissance (6 ; 13 ; 28) de la partie du signal de parole comprenant des informations sémantiques de la seconde des au moins deux classes comprend la génération d'une liste des N meilleurs candidats pour la reconnaissance à partir des entrées des listes respectives de vocabulaire correspondant aux parties respectives du signal de parole.

3. Procédé selon la revendication 2, dans lequel la génération de la liste des N meilleurs candidats pour la reconnaissance comprend l'affectation d'une note à chaque entrée des listes respectives de vocabulaire et/ou elle est fondée sur une probabilité prédéfinie d'erreur sur l'une des entrées de liste avec une autre des entrées de liste.

4. Procédé selon la revendication 3, dans lequel les notes sont définies sur la base d'une probabilité de modèle acoustique et/ou un modèle de Markov caché et/ou une probabilité de modèle grammatical et/ou une combinaison de ceux-ci.

5. Procédé selon l'une des revendications précédentes, dans lequel l'étape de numérisation du signal de parole comprend la division du signal de parole en trames et la détermination pour chaque trame d'au moins un vecteur de caractérisation.

6. Procédé selon la revendication 5, dans lequel l'au moins un vecteur de caractérisation comprend le contenu spectral du signal de parole et/ou est un vecteur cepstral.

7. Procédé selon l'une des revendications précédentes, dans lequel
a) la partie du signal de parole comprenant des informations sémantiques de la première des au moins deux classes comprend l'énonciation d'un nom de ville et le premier résultat de reconnaissance est un nom de ville et
b) la partie du signal de parole comprenant des informations sémantiques de la seconde des au moins deux classes comprend l'énonciation d'un nom de rue et le second résultat de reconnaissance est un nom de rue, ou
c) la partie du signal de parole comprenant des informations sémantiques de la première des au moins deux classes comprend l'énonciation d'un nom d'artiste et le premier résultat de reconnaissance est un nom d'artiste et
d) la partie du signal de parole comprenant des informations sémantiques de la seconde des au moins deux classes comprend l'énonciation d'un titre de chanson et le second résultat de reconnaissance est un titre de chanson, ou
e) la partie du signal de parole comprenant des informations sémantiques de la première des au moins deux classes comprend l'énonciation d'un nom de personne et le premier résultat de reconnaissance est le nom d'une personne et f) la partie du signal de parole comprenant des informations sémantiques de la seconde des au moins deux classes comprend l'énonciation d'une adresse ou d'un numéro de téléphone et le second résultat de reconnaissance est un numéro de téléphone.

8. Produit de programme informatique, comprenant un ou plusieurs supports pouvant être lus par ordinateur comportant des instructions exécutables par ordinateur permettant d'exécuter les étapes du procédé conforme à l'une des revendications 1 à 8.

9. Système de reconnaissance vocale, comprenant
une base de données configurée pour stocker au moins deux listes de vocabulaire,
une interface configurée pour détecter un signal de parole, un moyen de traitement configuré pour numériser le signal de parole détecté,
un moyen de reconnaissance configuré pour reconnaître une partie du signal de parole comprenant des informations sémantiques d'une première classe sur la base d'une première liste de vocabulaire de la base de données afin d'obtenir un premier résultat de reconnaissance,
un moyen de discrimination configuré pour restreindre au moins une liste de vocabulaire de la base de données qui est différente de la première liste de vocabulaire sur la base du premier résultat de reconnaissance, et dans lequel le moyen de reconnaissance est également configuré pour reconnaître une partie du signal de parole comprenant des informations sémantiques d'une seconde classe différente de la première classe sur, la base d'au moins une liste restreinte de vocabulaire de la base de données qui est différente de la première liste de vocabulaire afin d'obtenir un second résultat de reconnaissance,
**caractérisé en ce que**
le moyen de reconnaissance est en outre configuré pour déterminer la partie du signal de parole contenant une énonciation du nom d'une classe d'au moins l'une des au moins deux classes et comprenant des informations sémantiques pour lesquelles la plus courte des listes de vocabulaire est présente dans la base de données, et
pour reconnaître le nom de classe et ensuite la partie déterminée du signal de parole comprenant des informations sémantiques pour lesquelles la plus courte des listes de vocabulaire est présente dans la base de données comme partie du signal de parole comprenant des informations sémantiques de la première classe sur la base de la première liste de vocabulaire de la base de données afin d'obtenir un premier résultat de reconnaissance, dans laquelle la première liste de vocabulaire est la plus courte des listes de vocabulaire présentes dans la base de données.

10. Système de navigation pour véhicule comprenant le système de reconnaissance vocale conforme à la revendication 9.

11. Dispositif audio, en particulier un lecteur MP3 ou un dispositif vidéo, comprenant le système de reconnaissance vocale conforme à la revendication 9.

12. Téléphone cellulaire ou téléphone intelligent ou encore Assistant Personnel Numérique comprenant le système de reconnaissance vocale conforme à la revendication 9.
